# EUROPEAN PATENT APPLICATION

(11) **EP 4 481 174 A1**
(43) Date of publication of application: **25.12.2024**
(21) Application number: 24184024.8
(22) Date of filing: 24.06.2024
(51) Int. Cl.: F02C 3/22, C01B 3/04, H01M 8/22

(54) **AIRCRAFT POWER PLANT WITH AMMONIA-FUELED POWER GENERATION**

(30) Priority: 22.06.2023 US 202318212803
(71) Applicant: PRATT & WHITNEY CANADA CORP., Longueuil, Québec J4G 1A1 (CA)
(72) Inventor: NGUYEN, Kevin, (01BE5) Longueuil, J4G 1A1 (CA); BOUSQUET, Michel, (01BE5) Longueuil, J4G 1A1 (CA); GOVER, Christopher, (01BE5) Longueuil, J4G 1A1 (CA); BARBERGER, Jeremie, (01BE5) Longueuil, J4G 1A1 (CA); MICHAUD, Mathias, (01BE5) Longueuil, J4G 1A1 (CA)
(74) Representative: Dehns

(57) **Abstract**

There is provided a power generation system (120) for recuperating waste heat in an aircraft power plant (12). The power generation system (120) includes a source of ammonia (140); an ammonia cracker (146) in fluid communication with the source (140) and decomposing the ammonia into hydrogen and nitrogen; a separator (152) in fluid communication with the ammonia cracker (146), the separator (152) separating the hydrogen and nitrogen from the ammonia cracker (146), the separator (152) having a first outlet (156) for a first output including hydrogen and a second outlet (158) for a second output including hydrogen and nitrogen; a fuel cell (162) in fluid communication with the first outlet (156) of the separator (152), the fuel cell (162) using the hydrogen of the first output of the separator (152) and an oxidizing agent to generate electrical energy; and a thermal engine (172) in fluid communication with the second outlet (158) of the separator (152), the thermal engine (172) using the hydrogen of the second output of the separator (152) to generate mechanical energy.

## Description

### TECHNICAL FIELD

The disclosure relates generally to aircraft power plants, and more particularly to recuperating waste heat in aircraft power plants.

### BACKGROUND

It is desirable for aircraft engines to operate in an energy efficient manner to promote reduced carbon footprint, fuel consumption and operating costs. During operation of internal combustion engines, waste heat may be generated and released into the atmosphere. Although thermal management systems for aircraft engines exist, there remains room for improvement.

### SUMMARY

In one aspect, there is provided a power generation system comprising:
a source of ammonia;
an ammonia cracker in fluid communication with the source of ammonia, the ammonia cracker decomposing the ammonia from the source of ammonia into hydrogen and nitrogen;
a separator in fluid communication with the ammonia cracker, the separator separating the hydrogen and nitrogen from the ammonia cracker, the separator having a first outlet for a first output including hydrogen and a second outlet for a second output including hydrogen and nitrogen;
a fuel cell in fluid communication with the first outlet of the separator, the fuel cell using the hydrogen of the first output of the separator and an oxidizing agent to generate electrical energy; and
a thermal engine in fluid communication with the second outlet of the separator, the thermal engine using the hydrogen of the second output of the separator to generate mechanical energy.

The separator may be a first separator. The power generation system may include a second separator in fluid communication with the second outlet of the first separator and downstream of the first separator. The second separator may separate ammonia in the second output from the hydrogen and nitrogen in the second output.

A first outlet of the second separator may be in fluid communication with the source of ammonia to return the ammonia from the second separator to the source of ammonia.

A second outlet of the second separator may be in fluid communication with the first separator to return the hydrogen and nitrogen from the second separator to the first separator.

The second separator may be operatively disposed between the first separator and the thermal engine.

The thermal engine may be configured to receive the hydrogen and nitrogen directly from the second outlet of the separator.

The power generation system may include a heat exchanger facilitating heat transfer from a rotary engine to the ammonia in the ammonia cracker.

The ammonia may be in thermal transfer engagement with the thermal engine for cooling the thermal engine with the ammonia upstream of the ammonia cracker.

The power generation system may include a turbo-expander in fluid communication with the first outlet of the separator. The turbo-expander may use the hydrogen of the first output to generate mechanical energy.

The separator may include a selectively permeable membrane having a plurality of pores sized and shape to select hydrogen as permeate and both nitrogen and ammonia as retentate.

Embodiments may include combinations of the above features.

In another aspect, there is provided a method of operating an aircraft power plant including an internal combustion engine. The method comprises:
operating the internal combustion engine of the aircraft power plant;
generating heat using the internal combustion engine;
transferring the heat from the internal combustion engine to ammonia from a source of ammonia onboard the aircraft;
using the heat transferred to the ammonia to decompose the ammonia from the source of ammonia into hydrogen and nitrogen;
separating the hydrogen and nitrogen resulting from decomposing the ammonia and generating a first output including hydrogen and a second output including hydrogen and nitrogen;
using a fuel cell to generate electrical energy from the hydrogen of the first output and an oxidizing agent; and
using a thermal engine to generate mechanical energy from the hydrogen of the second output.

The method may include separating the second output into a third output including ammonia and a fourth output including hydrogen and nitrogen.

The ammonia from the third output may be returned to the source of ammonia.

The thermal engine may be configured to directly receive the second output.

The method may include generating mechanical energy using the hydrogen of the first output upstream of the fuel cell.

The method may include cooling the thermal engine with the ammonia before decomposing the ammonia.

Embodiments may include combinations of the above features.

In a further aspect, there is provided an aircraft power plant comprising:
an internal combustion engine for propelling an aircraft;
an ammonia cracker in fluid communication with a source of ammonia onboard the aircraft and in thermal transfer engagement with the internal combustion engine, the ammonia cracker decomposing the ammonia from the source of ammonia into hydrogen and nitrogen using heat from the internal combustion engine;
a separator in fluid communication with the ammonia cracker, the separator separating the hydrogen and nitrogen from the ammonia cracker, the separator having a first outlet for a first output including hydrogen and a second outlet for a second output including hydrogen and nitrogen;
a fuel cell in fluid communication with the first outlet of the separator, the fuel cell using the hydrogen of the first output of the separator and an oxidizing agent to generate electrical energy; and
a thermal engine in fluid communication with the second outlet of the separator, the thermal engine using the hydrogen of the second output of the separator to generate mechanical energy.

The internal combustion engine may be a Wankel engine.

The aircraft power plant may include a turbo-expander in fluid communication with the first outlet of the separator. The turbo-expander may use the first output upstream of the fuel cell to generate mechanical energy.

The separator may be a first separator. The aircraft power plant may include a second separator in fluid communication with the second outlet of the first separator and downstream of the first separator. The second separator may separate ammonia in the second output from the hydrogen and nitrogen in the second output.

Embodiments may include combinations of the above features.

Further details of these and other aspects of the subject matter of this application will be apparent from the detailed description included below and the drawings.

### DESCRIPTION OF THE DRAWINGS

Reference is now made to the accompanying figures in which:
Fig. 1 is a schematic view of an aircraft including an exemplary aircraft power plant including a power generation system as described herein;
Fig. 2 is a schematic view of an exemplary internal combustion engine of the aircraft power plant of Fig. 1;
Fig. 3 is a schematic view of an example of a power generation system for an aircraft power plant;
Fig. 4 is a schematic view of another example of a power generation system for an aircraft power plant;
Fig. 5 is a schematic view of another example of a power generation system for an aircraft power plant; and
Fig. 6 is a flow chart of an example method of operating an aircraft power plant including an internal combustion engine.

### DETAILED DESCRIPTION

The following disclosure describes aircraft power plants and associated methods for converting waste heat generated by aircraft engines into useful work. In various embodiments, power plants described herein make use of aircraft engine types that do not generate significant thrust for propelling the aircraft from their flow of exhaust gas exiting the engine. Accordingly, the flow of exhaust gas may be manipulated by passing it through a heat exchanger and cooling it without significantly reducing a thrust output or overall efficiency of the engine. The heat from the exhaust gas of the aircraft engine (and/or other heat sources of the aircraft engine) may be used to decompose ammonia (NH₃) into hydrogen (H₂) and nitrogen (N₂) which can then be used to generate electrical energy (i.e. electricity) and/or mechanical energy (e.g., rotation of a shaft) using a fuel cell and/or a thermal engine, respectively. The electrical energy and the mechanical energy may in turn perform useful work onboard the aircraft.

In some embodiments, ammonia may be used to recuperate waste heat generated by an aircraft power plant. Ammonia may be transported and stored in liquid form at moderate pressure and temperature. For example, ammonia is a liquid at a pressure of about 8.5 atm (about 810 kPa) and a temperature of 20° C. Alternatively, ammonia is a liquid at a pressure of 1 atm (about 100kPa) and a temperature of -33° C. Moreover, because ammonia does not contain carbon, it may be heated to temperatures above that of a hydrocarbon fuel without forming carbon deposits on portions of a fuel system. In some embodiments, the increased temperature capabilities may provide an increased heat sink capacity. Ammonia may be decomposed into hydrogen and nitrogen component parts via thermal decomposition, catalytic decomposition, or a combination of both. The hydrogen resulting from the ammonia decomposition may be used to generate electrical energy using a fuel cell, i.e., an electrochemical cell which converts the chemical energy of hydrogen and an oxidizing agent such as oxygen (O₂) into electricity through a pair of redox reactions. Moreover, the resulting hydrogen can also be used for combustion in a thermal engine for instance as it possesses improved combustion properties as a desirable clean burning fuel that does not generate undesirable exhaust products. Ammonia may be suitable for recuperating waste heat in aircraft applications.

The term "connected" or "coupled to" may include both direct connection or coupling (where two elements in question contact each other) and indirect connection or coupling (where at least one additional element is located between the two elements).

Aspects of various embodiments are described through reference to the drawings.

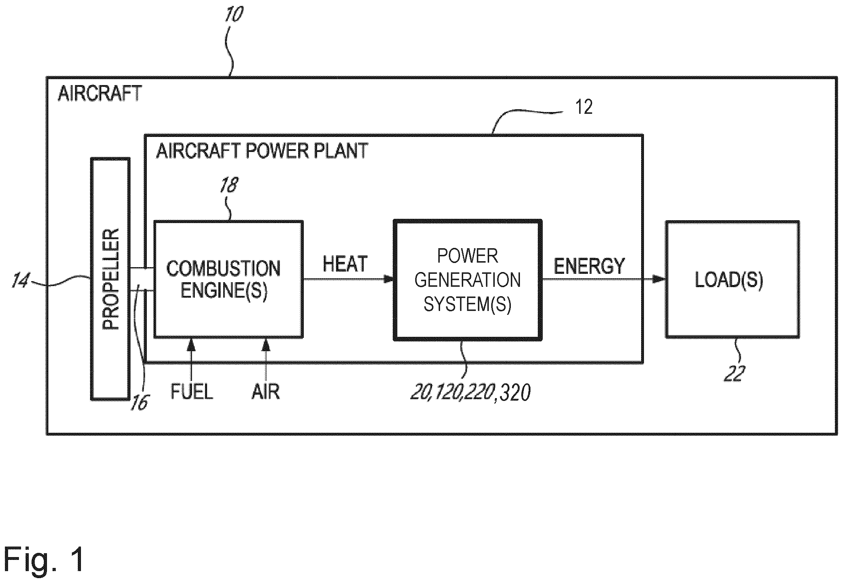

Fig. 1 schematically shows aircraft 10 including an exemplary aircraft power plant 12 as described further below. In various embodiments, aircraft 10 may be a manned or unmanned aircraft (e.g., drones) such as corporate, private, fixed-wing, rotary-wing (e.g., helicopter), commercial and passenger aircraft. In some embodiments, aircraft power plant 12 may be part of a propulsion system of aircraft 10. For example, aircraft power plant 12 may be drivingly engaged with propeller 14 or other type of air mover via output shaft 16, which may be a propeller drive shaft so that aircraft power plant 12 may provide energy for propulsion of aircraft 10. Aircraft power plant 12 may optionally generate energy for functions other than propulsion by supplying compressed air to pneumatic loads and/or driving accessories such as an electric generator and a hydraulic pump via an accessory gearbox.

In some embodiments, aircraft power plant 12 may be an auxiliary power unit (APU) of aircraft 10 and may provide energy exclusively for functions other than propulsion of aircraft 10. Such functions other than propulsion may include supplying compressed air to pneumatic loads, providing electric energy and/or driving a hydraulic pump for example. In some embodiments, aircraft power plant 12 may be a supplemental power unit (SPU) of aircraft 10 that may indirectly assist one or more main engines of aircraft 10 by providing compressed air and/or powering other accessory loads during certain phases of flight to allow more of the power output of the main engine(s) to be dedicated to the propulsive function.

Aircraft power plant 12 may include one or more (e.g., internal) combustion engines 18 (referred hereinafter in the singular as "engine 18"). Engine 18 may be of a type other than a turbofan engine. For example, engine 18 may be of a type where the exhaust gas of engine 18 produces no significant thrust for propelling aircraft 10 so that heat may be recuperated (e.g., by having the exhaust stream pass through a heat exchanger) from the exhaust gas without significantly affecting the propulsive energy output of engine 18. In some embodiments, engine 18 may include a gas turbine engine in a turboprop or turboshaft installation. In some embodiments, engine 18 may include an internal combustion engine using intermittent combustion during operation. Such engine 18 with intermittent combustion may be a reciprocating engine such as piston engine, or a pistonless rotary engine for example. In some embodiments, engine 18 may include a Wankel engine using an eccentric rotary design to convert pressure into rotating motion. In some embodiments, engine 18 may be a compound cycle engine as described in U.S. Pat. No. 10,107,195 (Title: COMPOUND CYCLE ENGINE), the entire contents of which are incorporated by reference herein. In some embodiments, engine 18 may operate on a mixture of relatively heavy fuel (e.g. diesel, kerosene (jet fuel), equivalent biofuel) and air.

Aircraft power plant 12 may also include one or more power generation systems 20, 120, 220, 320 (referred generally herein as "power generation system 20") operatively coupled to engine 18 and using for instance heat generated and rejected by engine 18 to heat ammonia from a source of ammonia for decomposition thereof. As explained below, heat from one or more heat sources (e.g., exhaust gas, coolant fluid, lubricating fluid) from engine 18 may be transferred to the power generation system 20. As explained below, power generation system 20 may use ammonia as a source of hydrogen to be used as reactant for the fuel cell(s) to produce electrical power and as combustible fuel for a heat engine.

Power generation system 20 may convert some of the heat transferred from engine 18 to power generation system 20 into electrical energy and/or mechanical energy that may be used to perform useful work onboard aircraft 10 by powering one or more loads 22 (referred hereinafter in the singular). Load 22 may include one or more electric loads, electric generators, one or more air compressors, and/or one or more hydraulic pumps. Aircraft power plant 12 may be a combined cycle power plant where engine 18 is operated as a topping cycle and power generation system 20 is operated as a bottoming cycle. In some embodiments, energy produced by power generation system 20 may also be combined with engine 18 to drive propeller 14 via appropriate mechanical coupling (i.e., clutch, gearbox).

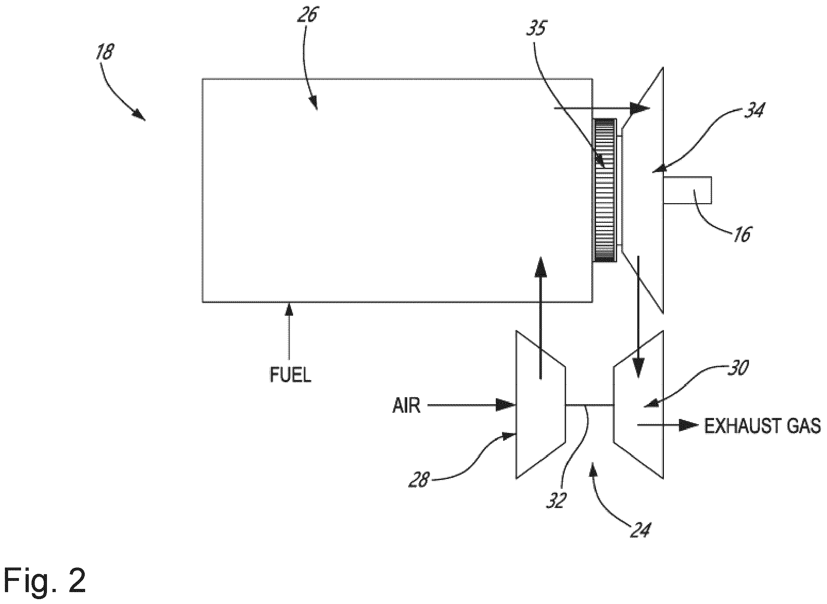

Fig. 2 schematically shows an exemplary combustion engine 18. In some embodiments, engine 18 may be turbocharged by way of optional turbocharger 24. In some embodiments, engine 18 may be a turbo-compound internal combustion engine such as described in U.S. Pat. No. 10,107,195 as an example. Engine 18 may include one or more (e.g., Wankel) rotary internal combustion engines. Engine 18 may include a rotor disposed inside and sealingly engaged with housing 26. Engine 18 may drive one or more loads which may or may not include propeller 14 via output shaft 16 which may be drivingly engaged with the load(s) via a (e.g., speed-reducing) gearbox.

Turbocharger 24 may include turbocharger compressor 28 and turbocharger turbine 30 which may be drivingly interconnected and engaged via shaft 32 so that turbocharger compressor 28 may be driven by turbocharger turbine 30. Turbocharger compressor 28 and turbocharger turbine 30 may each be a single-stage device or a multiple-stage device with a single shaft, or split on multiple independent shafts in parallel or in series, and may be a centrifugal, axial or mixed device. Shaft 32 of turbocharger 24 may be mechanically disconnected from output shaft 16 and may rotate separately from output shaft 16. Turbocharger compressor 28 of turbocharger 24 may receive (e.g., ambient) air and compress the air to be supplied as combustion air to engine 18.

Engine 18 may use intermittent combustion during operation and may provide a pulsating exhaust gas flow. The exhaust gas flow output from engine 18 may be directed to optional first stage turbine 34 drivingly engaged with output shaft 16 to extract energy from the flow of exhaust gas and transfer that extracted energy to output shaft 16. First stage turbine 34 may be configured to extract kinetic energy from the pulsating flow of exhaust gas exiting engine 18 while also stabilizing the flow. After passing through first stage turbine 34, the flow of exhaust gas may be directed to turbocharger turbine 30, which may be a second stage of energy extraction from the flow of exhaust gas following first stage turbine 34. Turbocharger turbine 30 may then drive turbocharger compressor 28. First stage turbine 34 and output shaft 16 may be drivingly engaged with engine 18 via an optional suitable speed altering (e.g., planetary) gear train 35.

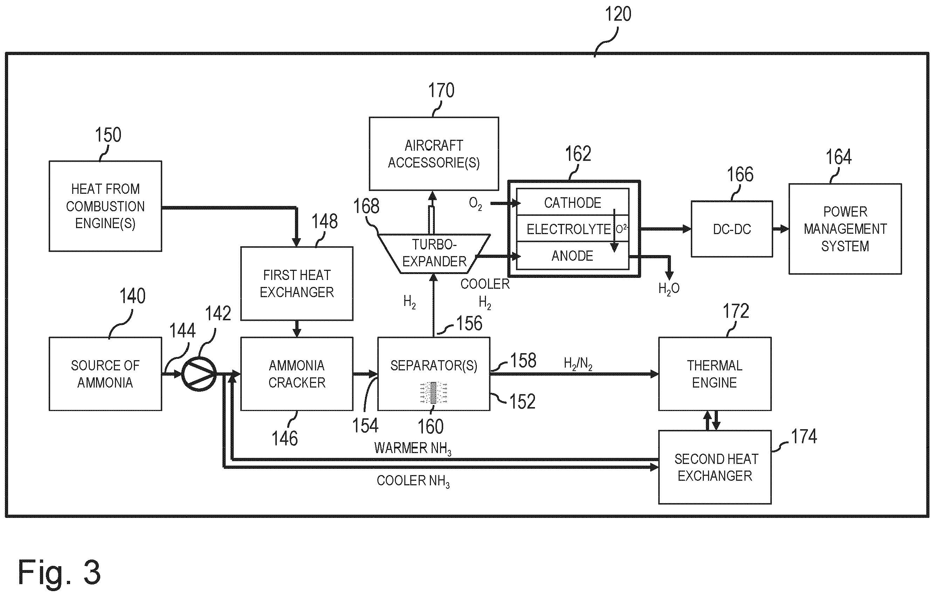

Fig. 3 shows an example of a power generation system 120 of aircraft power plant 12. As depicted, power generation system 120 has a source 140 (e.g., tank) of ammonia. The source 140 of ammonia stores a quantity of ammonia onboard aircraft 10 and can supply ammonia as desired. In some embodiments, the ammonia may be stored in liquid form. However, in some other embodiments, the ammonia may be stored in gaseous form as well. The ammonia may be provided in the form of a continuous or intermittent stream in various embodiments. In embodiments where an ammonia pump 142 is used, the ammonia pump 142 is in fluid communication with an outlet 144 of the source 140 of ammonia and pumps the ammonia out of the source 140 and downstream therefrom. The source 140 of ammonia may be partially or wholly refilled with ammonia between consecutive flights, for instance.

As illustrated, the power generation system 120 has an ammonia cracker 146 in fluid communication with the source 140 of ammonia indirectly via the ammonia pump 142. In some other embodiments, the ammonia cracker 146 may be in fluid communication directly with the source 140 of ammonia, thereby omitting the ammonia pump 142. During use, the ammonia cracker 146 may decompose the ammonia from the source 140 of ammonia into hydrogen and nitrogen, a process also known as "ammonia cracking." Under certain pressure and temperature conditions reproduced within the ammonia cracker 146, ammonia is partially or wholly decomposed into its constituent elements namely hydrogen and nitrogen. At the temperature where decomposition occurs, the constituent elements are generally in the gaseous state. Depending on the embodiment, the ammonia cracker 146 may be configured to heat the ammonia, in the presence of a suitable catalyst or not, above a given temperature where decomposition of the ammonia occurs under favorable pressure conditions. In some embodiments, the ammonia cracker 146 may be suitable to facilitate thermal decomposition and/or catalytic cracking for example. In case of catalytic cracking being utilized, suitable catalysts may include aluminosilicate zeolite and silica-alumina for example. In some embodiments, the power generation system 120 has a first heat exchanger 148 which facilitates heat 150 transfer between the ammonia in the ammonia cracker 146 and an internal combustion engine such as a rotary engine for example. In some embodiments, the heat transferred to ammonia cracker 146 may originate from another source onboard of aircraft 10.

The power generation system 120 may have one or more separators such as first separator 152 in fluid communication with the ammonia cracker 146. First separator 152 may be configured to facilitate membrane separation or pressure swing adsorption for example. As shown, the first separator 152 is downstream from the ammonia cracker 146 and thereby receives the cracked ammonia, i.e., the mixture of hydrogen and nitrogen, from the ammonia cracker 146 at a first inlet 154 of the first separator 152. During use, the first separator 152 separates the hydrogen and nitrogen from the ammonia cracker 146 into two different outputs via respective outlets 156 and 158. More specifically, and still referring to Fig. 3, the first separator 152 has a first outlet 156 outputting a first output including hydrogen and a second outlet 158 outputting a second output including hydrogen and nitrogen. In some embodiments, the first separator 152 has one or more selectively permeable membranes 160 (hereinafter in the singular "first membrane 160") each having pores which are sized and shaped to select hydrogen as permeate and both nitrogen and ammonia as retentate, as in some situations, some ammonia may go through the ammonia cracker 146 without decomposing. It is noted that the second output can include hydrogen as well since although the pores of the first membrane 160 are sized and shaped to let the hydrogen molecules permeates through them, some of the hydrogen molecules may also stay on a retentate-side of the first membrane 160 and not go through the pores of the first membrane 160 in some situations.

As shown in Fig. 3, one or more fuel cells 162 (referring hereinafter to the singular) may be provided in fluid communication with the first outlet 156 of the first separator 152 to receive the hydrogen therefrom. The fuel cell 162 uses the hydrogen from the first outlet 156 of the first separator 152 and an oxidizing agent (e.g., oxygen) to generate electrical energy, and may output water molecules as by-product. The water may be ejected into the atmosphere during flight of aircraft 10. As shown in this embodiment, the electrical energy generated by the fuel cell 162 may be used by a power management system 164 of the aircraft 10. A direct current to direct current (DC-to-DC) converter 166 can also be used to convert the DC voltage from the fuel cell 162 to another voltage level, when necessary. As schematically shown, the hydrogen may be generally supplied to an anode of the fuel cell 162 whereas the oxidizing agent may be generally supplied to a cathode of the fuel cell 162. The fuel cell 162 may be any type of electricity generating electrochemical fuel cell including, but not limited to, solid oxide fuel cells and proton-exchange membrane (PEM) for example. In some embodiments, the chemical reactions (1-3) that occur within the solid oxide fuel cell may be expressed as:

Anode: 2H₂ + 2O²⁻ → 2H₂O + 4e⁻ (1);

Cathode: O₂ + 4e⁻ → 2O²⁻ (2);

and

Overall reaction: 2H₂ + O₂ → 2H₂O (3).

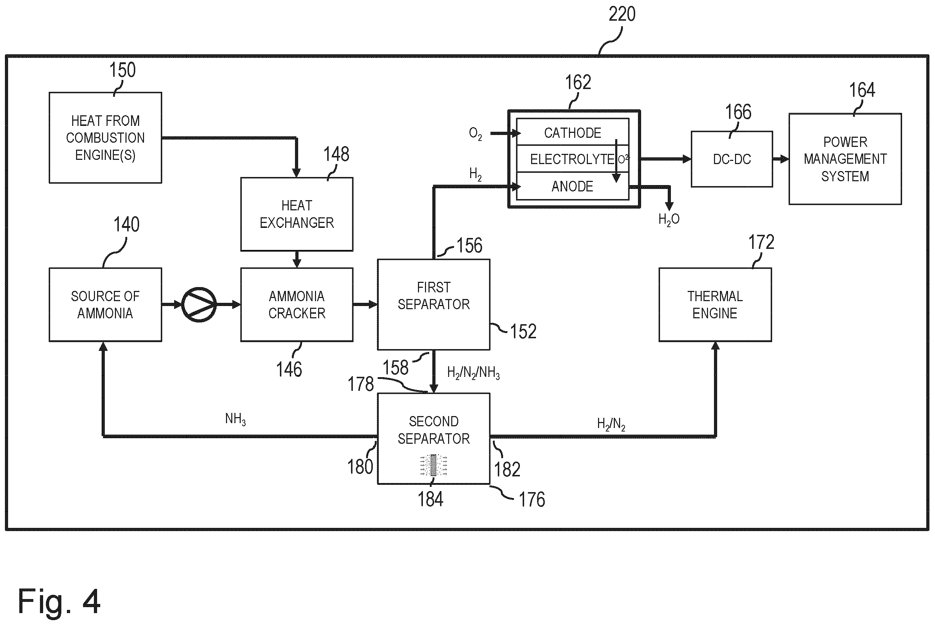

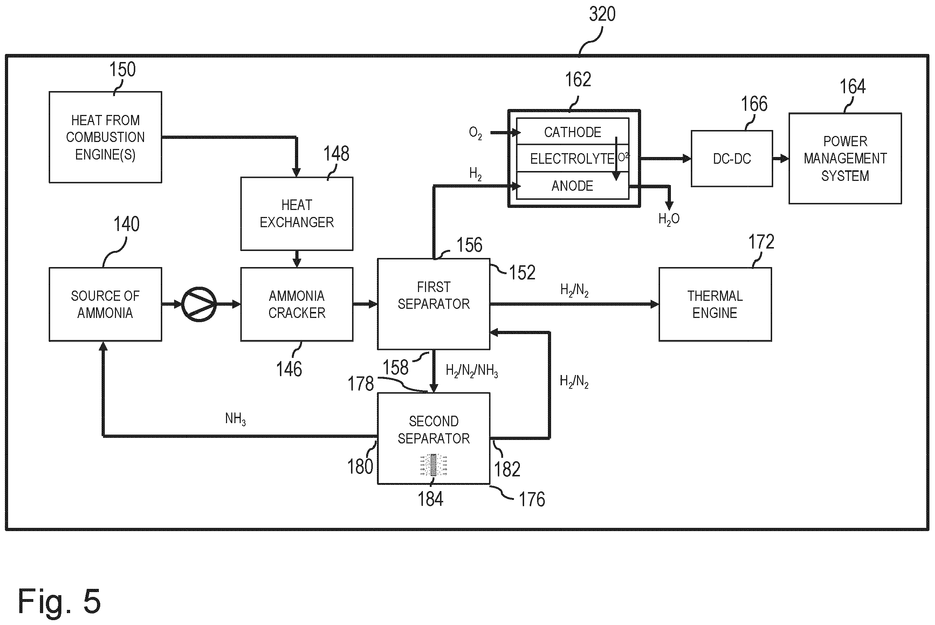

In various embodiments, some solid oxide fuel cells may work best using higher hydrogen temperatures and some PEM fuel cells may work with lower hydrogen temperature. In some embodiments, a turbo-expander 168 (i.e., expansion turbine) may be provided in fluid communication with the first outlet 156 of the first separator 152 to extract energy from the hydrogen being released from the first separator 152 to generate mechanical energy from the hydrogen. As shown, when energy (e.g., heat, pressure) has been extracted out of the hydrogen from the first outlet 156 via the turbo-expander 168, the cooler hydrogen may be directed to the anode of the fuel cell 162 for further use thereof. In such embodiments, the turbo-expander 168 can extract the energy carried by the hydrogen and use that energy to power one or more aircraft accessories 170. In some other embodiments, such as the ones described below with reference to Figs. 4 and 5, the turbo-expander 168 may be omitted, in which case the first outlet 156 of the first separator 152 may be connected directly to the fuel cell 162 in some embodiments.

As shown, the power generation system 120 may include a thermal engine 172 in direct fluid communication with the second outlet 158 of the first separator 152. In some embodiments, thermal engine 172 may be an internal combustion engine which may include a gas turbine or a piston engine for example. The thermal engine 172 may use the hydrogen from the second outlet 158 to generate mechanical energy by way of combustion of the hydrogen. In some embodiments, the nitrogen also outputted at the second outlet 158 may be released with exhaust gas of the thermal engine 172 and ultimately released in the atmosphere. In some embodiments, the ammonia may be in thermal transfer engagement (e.g., via a second heat exchanger 174) with the thermal engine 172 for cooling the thermal engine 172 with the ammonia upstream of the ammonia cracker 146. In these embodiments, a circulation loop may be established so that ammonia pushed by the ammonia pump 142 is directed towards the second heat exchanger 174 in thermal communication with the thermal engine 172 and then directed to the ammonia cracker 146. As such, the second heat exchanger 174 can pre-heat the ammonia prior to its entry into the ammonia cracker 146 where it may be further heated via the first heat exchanger 148. In some embodiments, the second heat exchanger 174 may be omitted and the ammonia may be heated solely by the first heat exchanger 148, and/or by other heat source(s). In some embodiments, both the first heat exchanger 148 and the second heat exchanger 174 may be used to heat the ammonia upstream of or at the ammonia cracker 146.

Fig. 4 shows another example of a power generation system 220 of aircraft power plant 12. The power generation system 220 may not include the turbo-expander 168 described with reference to the power generation system 120 of Fig. 3. The power generation system 220 may include elements of the power generation system 120 of Fig. 3, and like elements are identified using like reference numerals. The power generation system 220 may include two or more ammonia separators. For example, the power generation system 220 may include the first separator 152 and a second separator 176 in fluid communication with the second outlet 158 of the first separator 152 and downstream of the first separator 152. As shown, the second separator 176 may separate ammonia from the hydrogen and nitrogen outputted from the second outlet 158. As discussed earlier, some ammonia may not have been decomposed by the ammonia cracker 146 and may remain in the second output of the first separator 152. More specifically, the second separator 176 may have a second inlet 178 in fluid communication with the second outlet 158 for receiving the ammonia, hydrogen and nitrogen from the first separator 152. The second separator 176 may have a third outlet 180 for outputting a third output including ammonia (to be returned to source 140 of ammonia) and a fourth outlet 182 for outputting a fourth output including hydrogen and nitrogen (to be delivered to thermal engine 172).

In various embodiments, the second separator 176 may be of a same type or of a different type as the first separator 152. For example, the second separator 176 may have one or more selectively permeable membranes 184 (hereinafter in the singular as "second membrane 184") each having pores which are sized and shaped to select both hydrogen and nitrogen as permeate and ammonia as retentate. As shown, the third output 180 of the second separator 176 may be in fluid communication with the source 140 of ammonia to return the ammonia outputted at the third output back to the source 140 of ammonia. The fourth output of the second separator 176 may be in fluid communication with the thermal engine 172 to direct the hydrogen and nitrogen to the thermal engine 172 for combustion of the hydrogen as discussed above. In this example, the second separator 176 may thus be operatively disposed between the first separator 152 and the thermal engine 172.

Fig. 5 shows another example of a power generation system 320 of aircraft power plant 12. The power generation system 320 may include elements of the power generation systems 120, 220, and like elements are identified using like reference numerals. The power generation system 320 may have the first separator 152 and the second separator 176. However, instead of coupling the fourth outlet 182 of the second separator 176 directly to the thermal engine 172, the fourth outlet 182 of the second separator 176 may be coupled to direct the hydrogen and nitrogen back into the first separator 152. In this way, the hydrogen and nitrogen outputted from the fourth outlet 182 of the second separator 176 is returned to the first separator 152 for another (i.e., second) separation pass.

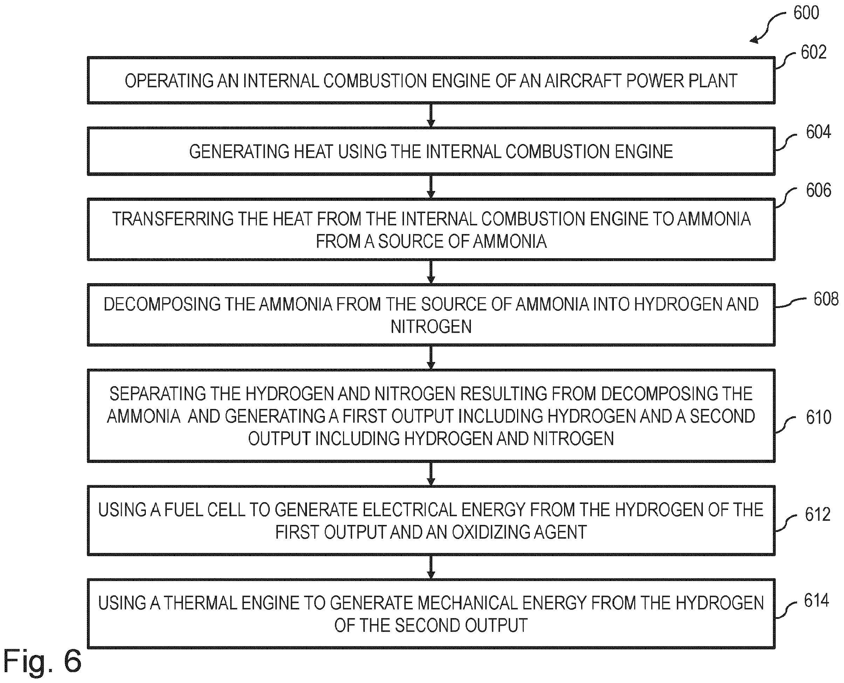

Fig. 6 shows a flow chart of a method 600 of operating aircraft power plant 12 including an internal combustion engine 18, or another aircraft power plant 12. Method 600 may include elements of aircraft power plant 12 and may include other actions disclosed herein. In various embodiments, method 600 may include:
operating the internal combustion engine 18 of the aircraft power plant 12 (block 602);
generating heat using the internal combustion engine 18 (block 604);
transferring the heat from the internal combustion engine 18 to ammonia from a source 140 of ammonia onboard the aircraft 10 (block 606);
using the heat transferred to the ammonia to decompose the ammonia from the source 140 of ammonia into hydrogen and nitrogen (block 608);
separating the hydrogen and nitrogen resulting from decomposing the ammonia and generating a first output 156 including hydrogen and a second output including hydrogen and nitrogen (block 610);
using a fuel cell 162 to generate electrical energy from the hydrogen of the first output 156 and an oxidizing agent (block 612); and
using a thermal engine 172 to generate mechanical energy from the hydrogen of the second output (block 614).

In some embodiments, the method 600 may include separating the second output into a third output including ammonia and a fourth output including hydrogen and nitrogen. The ammonia from the third output may be returned to the source 140 of ammonia.

The thermal engine 172 may be configured to directly receive the second output (e.g., from the second outlet 158).

The method 600 may include generating mechanical energy using the hydrogen of the first output 156 upstream of the fuel cell 162 via the turbo-expander 168 for example.

The method 600 may include cooling the thermal engine 172 with the ammonia before decomposing the ammonia.

As may be understood, the examples described above and illustrated are intended to be exemplary only. Modifications may be made to the described examples. For instance, the power generation system 20 may be used in conjunction with a main aircraft engine for propelling aircraft 10, an auxiliary engine (e.g., APU) or a supplemental engine (e.g., SPU). The hydrogen and nitrogen carried by either one or both of the second output 158 of the first separator 152 and the fourth output 182 of the second separator 176 may be partially or wholly routed overboard for disposal thereof. In embodiments where the ammonia cracker 146 involves catalytic cracking, the ammonia cracker 146 may have a linear or arcuate path of hydrogen-generating material reacting with the ammonia from the source 140 to trigger or enhance the ammonia decomposition. In some embodiments, the hydrogen-generating material may be nickel or any other suitable catalyst used for cracking ammonia. Although selectively permeable membranes are discussed above with reference to the first and second separators 152, 176 it is understood that other suitable molecular separation process may be used. The scope is indicated by the appended claims.

## Claims

1. A power generation system (20; 120; 220; 320) comprising:
a source of ammonia (140);
an ammonia cracker (146) in fluid communication with the source of ammonia (140), the ammonia cracker (146) decomposing the ammonia from the source of ammonia (140) into hydrogen and nitrogen;
a separator (152) in fluid communication with the ammonia cracker (146), the separator (152) separating the hydrogen and nitrogen from the ammonia cracker (146), the separator (152) having a first outlet (156) for a first output including hydrogen and a second outlet (158) for a second output including hydrogen and nitrogen;
a fuel cell (162) in fluid communication with the first outlet (156) of the separator (152), the fuel cell (162) using the hydrogen of the first output of the separator (152) and an oxidizing agent to generate electrical energy; and
a thermal engine (172) in fluid communication with the second outlet (158) of the separator (152), the thermal engine (172) using the hydrogen of the second output of the separator (152) to generate mechanical energy.

2. The power generation system (20; 120; 220; 320) of claim 1, wherein:
the separator is a first separator (152);
the power generation system (20; 120; 220; 320) includes a second separator (176) in fluid communication with the second outlet (158) of the first separator (152) and downstream of the first separator (152); and
the second separator (176) separating ammonia in the second output from the hydrogen and nitrogen in the second output.

3. The power generation system (20; 120; 220; 320) of claim 2, wherein a first outlet (180) of the second separator (176) is in fluid communication with the source of ammonia (140) to return the ammonia from the second separator (176) to the source of ammonia (140).

4. The power generation system (20; 120; 220; 320) of claim 2 or 3, wherein a second outlet (182) of the second separator (176) is in fluid communication with the first separator (152) to return the hydrogen and nitrogen from the second separator (176) to the first separator (152).

5. The power generation system (20; 120; 220; 320) of claim 2, 3 or 4, wherein the second separator (176) is operatively disposed between the first separator (152) and the thermal engine (172).

6. The power generation system (20; 120; 220; 320) of any preceding claim, wherein the thermal engine (172) is configured to receive the hydrogen and nitrogen directly from the second outlet (158) of the separator (152).

7. The power generation system (20; 120; 220; 320) of any preceding claim, comprising a heat exchanger (148) facilitating heat transfer from a rotary engine (18) to the ammonia in the ammonia cracker (146).

8. The power generation system (20; 120; 220; 320) of any preceding claim, wherein the ammonia is in thermal transfer engagement with the thermal engine (172) for cooling the thermal engine (172) with the ammonia upstream of the ammonia cracker (146).

9. The power generation system (20; 120; 220; 320) of any preceding claim, comprising a turbo-expander (168) in fluid communication with the first outlet (156) of the separator (152), the turbo-expander (168) using the hydrogen of the first output to generate mechanical energy.

10. The power generation system (20; 120; 220; 320) of any preceding claim, wherein the separator (152) includes a selectively permeable membrane (160) having a plurality of pores sized and shape to select hydrogen as permeate and both nitrogen and ammonia as retentate.

11. A method of operating an aircraft power plant (12) including an internal combustion engine (18), the method comprising:
operating the internal combustion engine (18) of the aircraft power plant (12);
generating heat using the internal combustion engine (18);
transferring the heat from the internal combustion engine (18) to ammonia from a source of ammonia (140) onboard the aircraft (10);
using the heat transferred to the ammonia to decompose the ammonia from the source of ammonia (140) into hydrogen and nitrogen;
separating the hydrogen and nitrogen resulting from decomposing the ammonia and generating a first output including hydrogen and a second output including hydrogen and nitrogen;
using a fuel cell (162) to generate electrical energy from the hydrogen of the first output and an oxidizing agent; and
using a thermal engine (172) to generate mechanical energy from the hydrogen of the second output.

12. The method of claim 11, wherein:
the method comprises separating the second output into a third output including ammonia and a fourth output including hydrogen and nitrogen, wherein, optionally, the ammonia from the third output may be returned to the source of ammonia (140); and/or
the thermal engine (172) is configured to directly receive the second output.

13. The method of claim 11 or 12, comprising:
generating mechanical energy using the hydrogen of the first output upstream of the fuel cell (162); and/or
cooling the thermal engine (172) with the ammonia before decomposing the ammonia.

14. An aircraft power plant (12) comprising:
an internal combustion engine (18) for propelling an aircraft (10);
an ammonia cracker (146) in fluid communication with a source of ammonia (140) onboard the aircraft (10) and in thermal transfer engagement with the internal combustion engine (18), the ammonia cracker (146) decomposing the ammonia from the source of ammonia (140) into hydrogen and nitrogen using heat from the internal combustion engine (18);
a separator (152) in fluid communication with the ammonia cracker (146), the separator (152) separating the hydrogen and nitrogen from the ammonia cracker (146), the separator (152) having a first outlet (156) for a first output including hydrogen and a second outlet (158) for a second output including hydrogen and nitrogen;
a fuel cell (162) in fluid communication with the first outlet (156) of the separator (152), the fuel cell (162) using the hydrogen of the first output of the separator (152) and an oxidizing agent to generate electrical energy; and
a thermal engine (172) in fluid communication with the second outlet (158) of the separator (152), the thermal engine (172) using the hydrogen of the second output of the separator (152) to generate mechanical energy,
wherein, optionally:
the aircraft power plant (12) further comprises a turbo-expander (168) in fluid communication with the first outlet (156) of the separator (152), the turbo-expander (168) using the first output upstream of the fuel cell (162) to generate mechanical energy; and/or
the separator is a first separator (152), the aircraft power plant (12) includes a second separator (176) in fluid communication with the second outlet (158) of the first separator (152) and downstream of the first separator (152), and the second separator (176) separating ammonia in the second output from the hydrogen and nitrogen in the second output.

15. The aircraft power plant (12) of claim 14, wherein the internal combustion engine (18) is a Wankel engine (18).
